**Europäisches Patentamt**

**European Patent Office**

**Office européen des brevets**

(11) Veröffentlichungsnummer : **0 327 543 B1**

(12) **EUROPÄISCHE PATENTSCHRIFT**

(45) Veröffentlichungstag der Patentschrift :
**11.09.91 Patentblatt 91/37**

(51) Int. Cl.$^5$ : **A23B 7/08**

(21) Anmeldenummer : **87906571.2**

(22) Anmeldetag : **29.09.87**

(86) Internationale Anmeldenummer :
**PCT/EP87/00555**

(87) Internationale Veröffentlichungsnummer :
**WO 88/02218 07.04.88 Gazette 88/08**

(54) **VERFAHREN ZUR HERSTELLUNG VON LAGERFÄHIGEN, GANZE FRÜCHTE ENTHALTENDEN FRUCHTZUBEREITUNGEN OHNE KONSERVIERUNGSSTOFFE UND DEREN VERWENDUNG.**

(30) Priorität : **04.10.86 DE 3633820**
**22.07.87 DE 3724214**

(43) Veröffentlichungstag der Anmeldung :
**16.08.89 Patentblatt 89/33**

(45) Bekanntmachung des Hinweises auf die
Patenterteilung :
**11.09.91 Patentblatt 91/37**

(84) Benannte Vertragsstaaten :
**AT BE CH DE FR GB IT LI LU NL SE**

(56) Entgegenhaltungen :
**FR-A- 2 034 749**
**GB-A- 2 098 040**
**US-A- 4 298 623**
**US-A- 4 562 085**

(56) Entgegenhaltungen :
**Journal of Food Science, Volume 46, no. 3, May-June 1981, (Chicago, Illinois, US), E. Heaton; "Effect of pretreatment on quality of sweet peach pickles", page 906-908, See page 906, column 1, paragraph 3**
**Patent Abstracts of Japan, volume 7, no. 147, (C-173) (1292), 28 June 1983 & JP-A-5860961 (Kempie K.K.), 11 April 1983, see the abstract**

(73) Patentinhaber : **STAMER, Hans**
**Kurt-Schumacher-Strasse 53**
**W-2120 Lüneburg (DE)**

(72) Erfinder : **STAMER, Hans**
**Kurt-Schumacher-Strasse 53**
**W-2120 Lüneburg (DE)**

(74) Vertreter : **Eisenführ, Speiser & Strasse**
**Martinistrasse 24**
**W-2800 Bremen 1 (DE)**

**Beschreibung**

Die Erfindung betrifft ein Verfahren zur Herstellung von lagerfähigen, ganze Früchte enthaltenden Fruchtzubereitungen ohne Konservierungsstoffe, bei dem man freirollende Früchte mit kristallinem Zucker oder hochkonzentrierter Zuckerlösung vermengt und die Mischung von Früchten und Saft nachfolgend thermisch haltbar macht.

Lagerfähige Fruchtzubereitungen werden von der Lebensmittelindustrie zu unterschiedlichen Zwecken benötigt. Sie können als reine Fruchtprodukte, wie beispielsweise als Kompott, dem Endverbraucher angeboten oder als Beimischungen zu beispielsweise Süßspeisen, gesäuerten Milchprodukten und insbesondere Joghurt verwendet werden.

Eines der attraktivsten Angebote ist Joghurt, der mit weitgehend intakten, stückigen Früchten vermischt ist.

Da Früchte ein ideales Substrat für insbesondere Hefen und Schimmelpilze verschiedenster Art sind und die Bildung resistenter Sporen begünstigen, müssen derartige Fruchtzubereitungen ausreichend haltbar gemacht sein. Die Haltbarmachung wurde bisher entweder durch den Zusatz von Konservierungsstoffen und/oder durch thermische Behandlung vorgenommen.

Die zur Konservierung von Früchten oder Fruchtmischungen verwendeten Konservierungsstoffe wie Ascorbinsäure oder Sorbinsäure sind zwar an sich ernährungsphysiologisch unbedenklich, sie wirken jedoch als Antioxidantien und zerstören damit wichtige Inhaltsstoffe der Früchte, beispielsweise Vitamine. Bei Vermischen mit Joghurt unterdrücken die in den Fruchtzubereitungen enthaltenen Konservierungstoffe zum Teil auch die Stoffwechselprodukte der im Joghurt erwünschten Mikroorganismen und blockieren deren Enzymsysteme. Im Ergebnis wirken sie demgemäß zwar konservierend auf die Fruchtzubereitung, senken aber nach Einmischen in die Joghurtmasse deren physiologischen Wert.

Im allgemeinen werden daher Fruchtzubereitungen, die zur Herstellung von Fruchtjoghurt vorgesehen sind, mit möglichst wenig Konservierungsstoffen versetzt der ohne Konservierungsstoffe thermisch haltbar gemacht. Die thermische Konservierung erfolgt dabei durch Wärmeübertragung eines Energieträgers mit hohem Energiegehalt auf die zu konservierende Fruchtzubereitung mit entsprechend niedrigerem Energieniveau. Dabei wird die Zubereitung auf mindestens 85 bis 125°C erhitzt ; diese Temperatur muß bei jedem in der Zubereitung enthaltenen Teilchen erreicht werden. Liegen in der Zubereitung stückige Früchte vor, so nimmt die für eine Haltbarmachung erforderliche Dauer der Temperatureinwirkung überproportional zu und es kommt nicht nur zu einer Zerstörung der Makro- und Mikrostrukturen der Früchte, sondern auch zu Aromaverlusten, Farbänderungen und Säure- bzw. Zuckerumlagerungen, was zur Zerstörung wichtiger Inhaltsstoffe führt. Insbesondere Früchte mit weicherem Fruchtfleisch, nachfolgend als "Weichfrüchte" bezeichnet, werden unter derartigen Gegebenheiten nahezu vollständig zerstört und in einen Fruchtbrei verwandelt.

Werden die mechanische Belastung sowie die Temperaturhöhe und -einwirkungszeit gesenkt, so können zwar die Früchte weitgehend intakt gehalten werden, jedoch ergibt sich ein hohes bakteriologisches Risiko, da insbesondere Sporen nicht durchgreifend abgetötet werden.

Um diesem Risiko zu begegnen, wird häufig die Joghurtmasse nach Vermischen mit der Fruchtzubereitung nochmals einer thermischen Behandlung unterworfen. Dabei werden jedoch nicht nur die unerwünschten Mikroorganismen, sondern ebenfalls die wertvollen Joghurtbakterien abgetötet, ferner Enzyme und Vitamine inaktiviert und Proteine zerstört.

Es ist vorgeschlagen worden, diese Nachteile durch Behandlung des fertig abgefüllten Joghurt in einem Mehrfrequenz-Verfahren zu vermeiden (vg. Sonderdruck aus "Die Molkereizeitung, Welt der Milch", Nr. 39 (1977)). Bei diesem Verfahren werden die Becher in Normalsteigen in ein umlaufendes Wasserbad eingesetzt, das bis knapp unter die Füllhöhe der Becher reicht. Sie werden horizontal mit Strahlung im Hochfrequenzbereich und vertikal mit Strahlungen im Ultrahochfrequenzbereich behandelt. Die erforderliche Temperaturhöhe und Behandlungsdauer ist gegenüber der herkömmlichen Temperaturbehandlung erheblich gesenkt. Auch bei diesem Verfahren werden jedoch die erwünschten Joghurtkulturen mit abgetötet und das Verfahren ist überdies außerordentlich teuer und zeitaufwendig. Die erreichbare Maximalleistung beträgt etwa 200 kg/Stunde.

Ein ähnliches Verfahren ist auch für die Konservierung von Fruchtzubereitungen vorgeschlagen worden (vgl. GB-PS 1583884). Hierbei werden die Früchte in Behälter gefüllt und in einem Wasserbad seitlich und von oben mit Hochfrequenz- bzw. Ultrahochfrequenzstrahlung behandelt. Wegen der begrenzten Eindringtiefe der Strahlung können jedoch nur verhältnismäßig kleine Behälter eingesetzt werden, die zudem nicht wirksam vorwärmbar sind, da die Wärmeübertragung aus dem äußeren in den inneren Bereich nur langsam vonstatten geht und zu einem erheblichen Wärmegefälle führen würde. Darüber hinaus führen die Schwierigkeiten, die sich bei diesem Verfahren einer schnellen und gleichmäßigen Abkühlung entgegenstellen, zu Qualitätsproblemen. Das Verfahren ist daher für die Herstellung haltbarer Fruchtzubereitungen im industriellen Maßstab sowohl technisch als auch wirtschaftlich ungeeignet.

Aus der DE-OS 3205982 ist ein Verfahren der eingangs genannten Art bekannt, bei dem ganze oder zerteilte, vorzugsweise tiefgefrorene, Früchte mit Zuckerlösung versetzt werden und die entstehende Mischung nachfolgend kontinuierlich durch einen Sterilisator gepumpt wird. Der Sterilisator wird von einem Röhrenerhitzer gebildet, der außenseitig mit Heizwasser beaufschlagt ist.

Dieses bekannte Verfahren gewährleistet zwar eine schon relativ schonende Behandlung der Früchte. Jedoch ist es notwendig, die gesamte Mischung vor der Sterilisierung durchgreifend durchzurühren, um darin beispielsweise Säureregulatoren und Zuschläge zur Konsistenzeinstellung homogen zu verteilen. Die entstehende Mischung ist dennoch inhomogen, die Früchte schwimmen im Saft auf. Da die Durchwärmung der Mischung nur über die Röhrenwand erfolgt, ist die Verweilzeit im Sterilisator insgesamt lang und zudem die Erwärmung ungleichmäßig, so daß Teile der Mischung übermäßig erwärmt werden.

Insgesamt ergibt sich auch bei diesem bekannten Verfahren ein erheblicher Strukturverlust der Fruchtkörper, begleitet von Qualitätsverlusten auf molekularer Ebene.

Der Erfindung liegt die Aufgabe zugrunde, ein in der Lebensmittelindustrie anwendbares, wirtschaftliches Verfahren der eingangs genannten Art zu schaffen, das auch für Weichfrüchte geeignet ist und bei dem die Mikro- und makrostrukturen der Früchte sowie die Inhaltsstoffe wie beispielsweise Vitamine und Aromen weitgehend erhalten bleiben.

Diese Aufgabe wird erfindungsgemäß durch die Merkmale des Anspruchs 1 gelöst.

Bevorzugte Ausführungsformen der Erfindung ergeben sich aus den Unteransprüchen 2 bis 15 ; vorteilhafte Verwendungen definieren die Ansprüche 16 und 17.

Das erfindungsgemäße Verfahren ist insbesondere zur Verarbeitung solcher Früchte geeignet, die unzerteilt in gesäuerten, Milchprodukten oder Süßspeisen verwendet werden. Beispiele hierfür sind Beerenfrüchte wie Erdbeeren, Himbeeren, Johannisbeeren, Blaubeeren usw. sowie Kirschen und Pflaumen.

Die Früchte können in frischem Zustand oder tiefgefroren in das Verfahren eingesetzt werden, wobei mit Weichfrüchten besonders in tiefgefrorenem Zustand gute Ergebnisse erzielt werden.

Bei der Durchführung des Verfahrens werden zunächst freirollende Früchte mit kristallinem Zucker oder einer hochkonzentrierten Zuckerlösung zusammengeführt. Als hochkonzentrierte Zuckerlösung kann eine künstlich hergestellte Lösung oder ein aus natürlichen Quellen stammender hochkonzentrierter Sirup dienen.

Die Mischung von beispielsweise tiefgefrorenen Weichfrüchten und Zucker bzw. Zuckerlösung wird in einem geeigneten Behälter, beispielsweise einer Wanne, erwärmt und gleichzeitig vorsichtig bewegt. Um diese vorsichtige Bewegung zu ermöglichen, kann der Behälter beispielsweise auf einer Welle gelagert werden, so daß der Behälter eine Taumelbewegung ausführen kann. Die Früchte werden in dem austretenden Saft bzw. der Mischung aus Zuckerlösung und Saft gehalten, bis ihre Trockenmasse etwa 35-65 Gew.%, vorzugsweise 55 Gew.% beträgt. Zur Bestimmung der Trockenmasse werden Fruchtproben von anhängender Flüssigkeit befreit und anschließend die Trockenmasse in bekannter Weise bestimmt.

In einer besonders bevorzugten Ausführungsform werden der Mischung 0,2-0,4 Gew.%, vorzugsweise 0,3-0,35 Gew.% Natriumcitrat, bezogen auf Mischung aus Früchten und Zucker bzw. Zuckerlösung, zugesetzt. Dies bewirkt eine Festigkeitssteigerung der Früchte.

Nachfolgend werden die ganzen Früchte, die bei dieser vorsichtigen Entsaftung praktisch keinen Strukturverlust erleiden, auf schonende Weise vom Saft abgetrennt, beispielsweise mittels eines Siebes. Vorzugsweise dient dazu ein Siebeinsatz im Behälter, der zur Abtrennung der Früchte nur angehoben werden muß.

Der gewonnene Saft wird ganz oder teilweise, insbesondere durch Erhitzen mit einem Verdickungsmittel auf maximal 100°C, auf eine Dichte eingestellt, die annähernd der Dichte der abgetrennten Früchte entspricht. Diese Dichteeinstellung kann mit einer Konzentration des Saftes durch Eindampfen einhergehen. Dabei wird gleichzeitig vorzugsweise eine höhere Viskosität von 50-70 mPa s eingestellt. Als Verdickungsmittel eignen sich beispielsweise Pektin, Guarkernmehl, Johannisbrotkernmehl, Carragen oder Mischungen verschiedener solcher Verdickungsmittel. Vorzugsweise wird eine dem Gewicht der Früchte entsprechende Saftmenge mit einem Säureregulator auf einen pH-Wert von etwa 3 bis 4 eingestellt, wobei ggf. Farb- und Aromastoffe hinzugefügt werden. Als Säureregulatoren eignen sich Genußsäuren wie beispielsweise Zitronensäure. Als Farb- und Aromastoffe kommen beispielsweise Rote-Bete-Saft, Traubenschalenkonzentrat und natürliche sowie naturidentische Aromastoffe in Betracht, die vorzugsweise bis zu einer Menge von etwa 0,65 Gew.%, bezogen auf die Gesamtmischung aus Früchten und Saft, angewendet werden.

Der in dieser Weise vorbehandelte, in der Menge, Dichte und Viskosität eingestellte Saft wird nun vorsichtig bei einer Temperatur von 30-40°C, vorzugsweise 35°C, mit den ganzen Früchten vereinigt. Die Früchte werden durch äußerst schonendes Rühren gleichmäßig im Saft verteilt. Wegen der etwa gleichen Dichten von Früchten und Saft schwimmen die Früchte nicht auf, sondern bleiben vielmehr etwa gleichmäßig über das gesamte Volumen des Saftes verteilt. Die höhere Viskosität des Saftes trägt zur Aufrechterhaltung dieser homogenen Verteilung der Früchte im Saft dadurch bei, daß Schwimmbewegungen der Früchte behindert werden. Insgesamt wird so eine Mischung erhalten, in welcher die Früchte — wenigstens über kürzere Zeiträume betrachtet — praktisch unbeweglich im Saft schweben.

Wird, wie oben ausgeführt, nur ein Teil des ursprünglich aus den Früchten erhaltenen Fruchtsaftes in dem erfindungsgemäßen Verfahren weiterverarbeitet, so kann der verbleibende Saft schonend eingeengt oder getrocknet, beispielsweise gefriergetrocknet werden und als Aromastoff dienen. Beispielsweise läßt sich solcher gefriergetrockneter Saft bei der Herstellung von Joghurt verwenden.

Die so erhaltene, stabilisierte und homogene Fruchtzubereitung wird nun vorsichtig, beispielsweise durch eigenes Gefälle, zu einer großvolumigen, kontinuierlich arbeitenden Pumpe, vorzugsweise vom Typ der zweiflügeligen Dreh- oder Kreiskolbenpumpen oder Sinuspumpen, geleitet und von dieser durch eine Erhitzungsstrecke gepumpt. Durch die erfindungsgemäße Vorbehandlung werden auch Weichfrüchte in einem solchen Umfang stabilisiert, daß sie ohne wesentliche Beschädigung ihrer makro- und Mikrostrukturen pumpbar sind. Beispiele für geeignete Pumpen sind die zweiflügelige Drehkolbenpumpe, die zweiflügelige Kreiskolbenpumpe sowie die Sinuspumpe.

Insbesondere die erfindungsgemäß eingestellte Homogenität und gleichmäßige Dichte der Mischung mit im wesentlichen frei im Saft schwebenden Früchten erweist sich bei der folgenden Erhitzung als vorteilhaft. Diese zur Haltbarmachung dienende Erhitzung erfolgt vorzugsweise ausschließlich durch Mikrowellen, da auf diese Weise jede lokale Überwärmung vermieden wird.

In einer anderen Ausführungsform der Erfindung wird die Mischung von der Pumpe kontinuierlich und pulsationsfrei durch eine rohrförmige Erhitzungsstrecke geführt, die einen fluidbeheizten, dem Mikrowellen-Erhitzungsbereich vorgeschalteten Vorwärmbereich aufweist, und erreicht beim Durchlaufen des Vorwärmbereiches vor Eintritt in den Mikrowellen-Erhitzungsbereich eine Temperatur von etwa 50-60°C, vorzugsweise etwa 55°C. Wegen dieser Vorwärmung muß bis zum Erreichen der im Erhitzungsbereich für die Haltbarmachung erforderlichen Temperatur von etwa 65-90°C, vorzugsweise 80-90°C, nur eine verhältnismäßig geringe Temperaturdifferenz überwunden werden. Dies bewirkt eine Qualitätssteigerung der Fruchtzubereitung, da die Verweilzeit im Mikrowellen-Erhitzungsbereich entsprechend kurz gehalten werden kann und die Mischung der hohen Temperatur nur für einen sehr kurzen Zeitraum, nämlich 2-20, vorzugsweise 4-5 Sekunden ausgesetzt wird. Andererseits erweist sich meist eine erneute Durchmischung vor Eintritt in den Mikrowellen-Erhitzungsbreich als notwendig, so daß man diese Ausführungsform vorzugsweise für stabilere Früchte verwenden wird. Außerdem kann die Vorwärmung, die nur durch Wärmeübertragung von der Rohrwand aus erfolgt, besonders empfindliche Früchte übermäßig belasten. In diesem Fall wird man eine ausschließliche Erhitzung durch Mikrowellen vorziehen, auch wenn die Verweilzeit im Hochtemperaturbereich länger ist.

Im Mikrowellen-Erhitzungsbereich findet in beiden Ausführungsformen die eigentliche Haltbarmachung statt. Die Fruchtzubereitung kann in diesem Bereich durch ein Teflonrohr geleitet werden ; erfindungsgemäß wird jedoch vorzugsweise ein Glasrohr verwendet. Auf diese Weise können die Früchte ggf. auch mit Überdruck und bei kurzzeitig sehr hohen Temperaturen, beispielsweise bei 125°C, erhitzt und dabei vollkommen sterilisiert werden.

Die Frequenz der elektromagnetischen Mikrowellenfelder liegt bevorzugt zwischen 600 und 2000 MHz. Die Verwendung eines rohrförmigen Mikrowellen-Erhitzungsbereiches mit einem Rundhohlleiter, in dem das elektromagnetische Mikrowellenfeld erfindungsgemäß in einer $E_{01}$-Mode angeregt ist, bewirkt eine schnelle und homogene Erwärmung der Mischung über den Einstrahlungsquerschnitt. Hierbei wirkt sich die etwa gleiche Dichte von Saft und Früchten besonders vorteilhaft aus ; im Vergleich mit Mischungen, deren Komponenten ungleichere Dichten aufweisen, ist die Erwärmung sehr viel gleichmäßiger und damit auch schneller. Es versteht sich, daß die Makro- wie auch die Mikrostruktur bis herab zur molekularen Ebene der Mischung sehr viel mehr geschont wird, wenn Temperaturgradienten und Erhitzungszeit im erfindungsgemäßen Sinne minimiert werden.

Am Übergang des Mikrowellen-Erhitzungsbereichs in den (bei beiden Ausführungsformen folgenden) Abkühlbereich kann eine Feinst-Dosierpumpe zwischengeschaltet sein, durch welche Farben und Aromen in die Mischung eingebracht werden können. Hierdurch wird erreicht, daß die temperaturempfindlichen Farb- und Aromastoffe in dem Mikrowellen-Erhitzungsbereich nicht zerstört und dennoch aufgrund der hohen Austrittstemperatur der Zubereitung ebenfalls haltbar gemacht werden.

Bei stark mit Mikroorganismen verunreinigten Früchten empfiehlt es sich, eine fraktionierte Wärmebehandlung vorzunehmen. Dazu wird die Fruchtzubereitung nach Durchlaufen der Erhitzungsstrecke zunächst auf etwa Raumtemperatur abgekühlt und nach einer gewissen Zeitdauer, die zum Auskeimen ggf. lebensfähig gebliebener Sporen ausreicht, erneut der obenbeschriebenen Wärmebehandlung unterworfen.

Die Mischung wird in dem sich an den Mikrowellen-Erhitzungsbereich anschließenden Abkühlbereich auf etwa 15-25°C abgekühlt. Die Leistung der Erhitzungsstrecke insgesamt beträgt bei der zuvor beschriebenen Ausführungsform etwa 800 kg/Stunde.

Für belastbare Früchte kann die Wirtschaftlichkeit des Verfahrens dadurch gesteigert werden, daß der dann vorzusehende Vorwärm- und der Abkühlbereich der rohrförmigen Erhitzungsstrecke von einem in sich geschlossenen Röhrenaustauschsystem umgeben sind, dessen Wärmeaustauschmedium die im Abkühlbereich aufgenommene Energie dem Vorwärmbereich zuführt. In diesem geschlossenen System geht praktisch keine Energie verloren und der Energiebedarf in dem eigentlichen Erhitzungsbereich ist erheblich geringer, als dies ohne Vorwärmung der Fall wäre.

Nach Verlassen des Abkühlbereichs wird die Mischung unter sterilen Bedingungen gesammelt und ggf. in Behälter abgefüllt. Die Mischung bleibt bei entsprechender Einstellung von Dichte und Viskosität auch über längere Zeiträume homogen, d.h. der Schwebezustand der Früchte im Saft bleibt erhalten und irgendwelche Aufschwimmbewegungen der Fruchtkörper (beispielsweise aufgrund nicht völlig abgeglichener Dichteunterschiede) werden durch die Viskosität der Mischung weitgehend unterdrückt. Dadurch ist es jedenfalls bei kürzerer Zwischenlagerung nicht nötig, die Mischung vor einer nachfolgenden Verarbeitungsstufe erneut durchzurühren. Auch dies trägt zur Intakthaltung der Früchte bei.

Die erfindungsgemäß hergestellte Fruchtzubereitung ist ein ernährungsphysiologisch hochwertiges und wirtschaftlich attraktives Produkt mit im wesentlichen unversehrten ganzen Früchten, welches die Fruchtinhaltsstoffe wie Vitamine, Aromastoffe, Mineralien, Zucker usw. weitgehend im natürlichen Zustand enthält.

Die Zubereitung kann als solche oder als Beimischung zu anderen Lebensmittelprodukten wie beispielsweise gesäuerten Milchprodukten oder zur Herstellung von Desserts verwendet werden.

Die erfindungsgemäße Fruchtzubereitung ist insbesondere zur Herstellung von Joghurt geeignet, der ganze Früchte enthält und in gekühltem Zustand lagerfähig ist. Hierzu kann die Fruchtzubereitung entweder direkt nach Austreten aus der obenbeschriebenen Erhitzungsstrecke oder aus einem Sterilbehälter unter aseptischen Bedingungen in bekannter Weise über Mischstrecken in den Joghurtstrom eindosiert werden. Das Verhältnis von Fruchtzubereitung zu Joghurt beträgt dabei gewöhnlich etwa 20 : 80 Gew.%. Die Weiterverarbeitung und Portionierung des ganze Früchte enthaltenden Joghurts findet nach bekannten Verfahren unter im wesentlichen aseptischen Bedingungen statt. Da die Fruchtzubereitung bezüglich der Haltbarkeit kein Risikofaktor ist, erübrigt sich bei Verwendung der erfindungsgemäßen Fruchtzubereitung eine nochmalige Sterilisierung des erhaltenen Joghurts. In diesem bleiben somit die wertvollen und erwünschten Joghurtbakterien in lebensfähigem Zustand. Das erhaltene Produkt hat eine Lagerfähigkeit von mindestens 28 Tagen bei 10°C.

Ausgezeichnete Ergebnisse werden ferner bei Verwendung der erfindungsgemäßen Fruchtzubereitung zur Herstellung von Fruchtquark und süßen Fruchtdesserts erhalten.

Die Erfindung wird nachfolgend anhand von Beispielen erläutert.

Beispiel 1

500 kg tiefgefrorene, freirollende und nicht angetaute Erdbeeren wurden in eine doppelwandige, mit Dampf beheizbare Wanne mit Siebeinsatz eingefahren. Nach Hinzufügen von 500 kg kristallförmiger Saccharose wurde die Wanne beheizt und ihr Inhalt auf etwa 30-35°C angewärmt. Nach dem Antauen der Früchte trat Fruchtwasser aus und nach etwa 10 bis 12 Stunden schwammen die Früchte in einer aus Fruchtwasser und Zucker gebildeten Lösung. Der Mischung wurden 3 kg Natriumcitrat zugesetzt und die Wanne in eine Taumelbewegung versetzt, um einen "Wasserhof" um die Erbeeren zu vermeiden. Nach 24 Stunden war die Trockenmasse der Erdbeeren von anfänglich 12 Gew.% auf 55 Gew.% angestiegen. Jetzt wurden die Früchte durch hydraulisches Anheben des Siebeinsatzes von dem Saft getrennt. Nach Abtropfen der Früchte wurden 300 kg Früchte und 700 kg Saft erhalten. Die Früchte wurden mittels einer hydraulischen Kippvorrichtung in einen Vorlage-Mischbehälter eingebracht.

300 kg des Saftes wurden mit 3,6 kg Stabilisatormischung, bestehend aus Johannisbrotkernmehl (E410), Guarkernmehl (E412), Pektin (E440a) und Carragen (E407) zu etwa gleichen Gewichtsteilen vermischt und nach Einstellen des pH-Wertes des Saftes auf 3,7 mit Zitronensäure (E330) 20 Minuten lang auf etwa 98°C erhitzt. Unmittelbar vor Abschluß dieser Erhitzungsphase wurden 0,32 kg Traubenschalenkonzentrat (E136) in den Saft eingebracht. Der Saft wurde auf 80-85°C abgekühlt, ebenfalls in den Vorlage-Mischbehälter gepumpt und unter vorsichtigem Rühren mit den Früchten vermischt. Die Temperatur der Mischung betrug etwa 35°C. Danach schwebten die Früchte gleichmäßig verteilt und ohne einen "Wasserhof" in dem angedickten Saft. Die Viskosität des Saftes, gemessen bei 20°C, betrug 61,4 mPa s.

Die Fruchtmischung wurde anschließend durch eigenes Gefälle in einen unter dem Vorlage-Mischbehälter befindlichen Sterilbehälter überführt und von dort mit einer großvolumigen, zweiflügeligen Drehkolbenpumpe pulsationsfrei durch das geschlossene Rohrsystem einer Erhitzungsstrecke gefördert. Die Erhitzungsstrecke bestand aus einem Röhrenvorwärmer, einem kontinuierlich arbeitenden Röhren-Mikrowellenerhitzer und einem Rohrkühler, wobei ein Glasrohr mit einer Nennweite von 40 mm verwendet wurde.

In dem Vorwärmbereich wurde die Fruchtzubereitung auf etwa 55°C erhitzt. Nachfolgend trat die Mischung durch den Mikrowellen-Erhitzungsbereich. Der Durchtritt beanspruchte 4-5 Sekunden, während derer sich die Mischung auf 85°C erhitzte. Die Strahlungsfrequenz im Mikrowellen-Erhitzungsbereich betrug 915 MHz. In dem unmittelbar an den Erhitzungsbereich anschließenden Kühlbereich wurde die Fruchtzubereitung auf 20°C abgekühlt und in einem 800 kg aufnehmenden Sterilbehälter gesammelt.

Die Leistung des Systems lag bei 800 kg/Stunde.

## Beispiel 2

Herstellung von Fruchtjoghurt

1000 l Milch wurden durch Vakuumverdampfung in der fettfreien Trockenmasse um 3% angehoben und anschließend bei 55°C und einem Druck von 150 bar in einer einstufigen Homogenisiermaschine homogenisiert, auf 90°C erhitzt und 10 Minuten lang bei dieser Temperatur gehalten.

Die Milch wurde dann auf 39°C abgekühlt, in einen Steriltank überführt und mit einer Joghurtkultur beimpft, welche die Stämme Streptococcusthermophilus, Lactobacillus bulgaricus und Streptococcus filant enthielt und lyophilisiert war. Die beimpfte Milch wurde 10-12 Stunden lang bei 38°C inkubiert. Es wurde eine Joghurt-Milch-Gallerte erhalten, deren pH-Wert 4,8 betrug und die eine gleichmäßige glatte Konsistenz aufwies.

Die Gallerte wurde anschließend mit zunächst niedrigen, dann ansteigenden Drehzahlen homogen gerührt, in einem Platten-Kühler gekühlt und bei 20°C in einem Puffertank zwischengelagert.

Von hier aus wurde die Joghurtmasse zur Abfüllanlage gepumpt. Durch eine unmittelbar vor den Dosiereinrichtungen in die Abfüllanlage mündende Rohrstrecke wurde die Fruchtmischung gemäß Beispiel 1 in die Joghurtmasse eingespeist und mit Hilfe eines eingebauten dynamischen Rohrmischers homogen mit dieser vermischt. Das Volumenverhältnis von Joghurtmasse zu Fruchtzubereitung Betrug dabei etwa 4 : 1. Die Mischung wurde anschließend unter aseptischen Bedingungen auf 250g-Becher abgefüllt, die die Füllanlage in verschlossenem Zustand verließen. 400 Proben der Gesamtproduktion wurden je zur Hälfte bei 10°C bzw. bei 18°C 28 Tage lang aufbewahrt. Am Ende dieser Zeit waren sämtliche Proben frei von Hefen und Schimmel. Der pH-Wert der bei 10°C aufbewahrten Proben betrug 4,05 und derjenige der bei 18°C aufbewahrten Proben 3,55.

## Beispiel 3

Herstellung von Fruchtquark

1000 l Magermilch wurden auf 92°C erhitzt und 10 Minuten lang bei dieser Temperatur gehalten. Anschließend wurde die Milch auf 26°C abgekühlt und in einem Fermentiertank mit einer Mischkultur beimpft, die die Stämme Streptococcus lactis, Streptococcus cremoris und Streptococcus diacetilactis enthielt. Die Milch wurde anschließend bis zum Erreichen eines pH-Wertes von 6,2 bei 26°C inkubiert.

Anschließend wurden 1,5 g Flüssiglab (Konzentration 1 : 10000) je 1000 Liter zu der Milch gegeben. Nach Unterschreiten des isoelektrischen Punktes wurde die Quarkmilch-Gallerte mit ansteigenden Drehzahlen gerührt und anschließend durch einen Separator gefahren, in welchem der Speisequark von der Molke getrennt wurde.

Der erhaltene Quark (etwa 220 kg) wurde auf etwa 12°C gekühlt und in einem Steriltank zwischengelagert. Die Quarkmasse wurde wie in Beispiel 2 mit der Fruchtzubereitung gemäß Beispiel 1 vermischt und portioniert, wobei zusätzlich 40%iger Rahm in die Füllanlage eingespeist wurde, um den Quark auf einen Fettgehalt von 20% i.Tr. zu bringen.

Es wurde die gleiche Anzahl Proben wie in Beispiel 2 unter gleichen Bedingungen aufbewahrt. Am Ende der Aufbewahrungszeit waren sämtliche Proben frei von Hefen und Schimmel. Der pH-Wert der bei 10°C aufbewahrten Proben lag bei 4,35 ; der pH-Wert der bei 18°C aufbewahrten Proben lag bei 3,85.

## Beispiel 4

Herstellung von Fruchtdessert mit geschlagener Sahne

500 l Sahne mit einem Fettgehalt von 30% wurden mit 4 Gew.% Glucosesirup, 4 Gew.% Festzucker und 0,2 Gew.% Carragenan (E407), jeweils bezogen auf die Gesamtmenge, vermischt, auf 55°C erwärmt und bei dieser Temperatur bei einem Druck von 150 bar in einer einstufigen Homogenisiermaschine homogenisiert. Die Mischung wurde anschließend auf 134°C erhitzt, 3-4 Sekunden lang bei dieser Temperatur gehalten und anschließend auf 4°C abgekühlt.

Nach einer Zwischenlagerung von 6 Stunden in einem sterilen Lagertank wurde die Sahne in einer kontinuierlich arbeitenden Aufschlagmaschine (Mondomix) mit keimfreiem Stickstoffdioxid unter aseptischen Bedingungen aufgeschlagen. Das Aufschlagvolumen betrug 150%.

Die aufgeschlagene Sahne wurde einer aseptisch arbeitenden Füllanlage zugeleitet, die zunächst 75 g der sterilen Fruchtzubereitung gemäß Beispiel 1 und anschließend 25 g der Sahne als Topping in 125ml-Becher dosierte und die Becher steril verschloß.

Von der Gesamtproduktion wurden wiederum 400 Proben entnommen und je zur Hälfte bei 10°C bzw. 18°C 21 Tage lang aufbewahrt.

Nach Ablauf dieser Zeit waren sämtliche Proben frei von Hefen und Schimmel. Die geschlagene Sahne hatte in allen Fällen noch eine lockere Konsistenz und war — abgesehen von einer leichten Rötlichfärbung — an der Grenzschicht zwischen Sahne und Frucht unverändert.

**Patentansprüche**

1. Verfahren zur Herstellung von lagerfähigen, ganze Früchte enthaltenden Fruchtzubereitungen ohne Konservierungsstoffe, bei dem man freirollende Früchte mit kristallinem Zucker oder hochkonzentrierter Zuckerlösung vermengt und die Mischung von Früchten und Saft nachfolgend thermisch haltbar macht, dadurch gekennzeichnet, daß man

    a) die Mischung solange schonend bewegt, bis die Trokkenmasse der Früchte etwa 35 bis 65 Gew.-% beträgt,

    b) die Früchte anschließend schonend von dem Saft abtrennt,

    c) den Saft oder einen Teil desselben, insbesondere durch Erhitzen auf maximal 100°C, auf eine Dichte einstellt, die wenigstens näherungsweise der Dichte der abgetrennten Früchte entspricht, wobei vorzugsweise eine Viskosität von 50 bis 70 mPa s eingestellt wird,

    d) den so behandelten Saft mit den abgetrennten Früchten wieder zu einer Mischung vereinigt, in welcher die Früchte gleichmäßig schweben,

    e) die Mischung anschließend durch einen Mikrowellen-Erhitzungsbereich mit einem Mikrowellenfeld, welches im gesamten Rohrquerschnitt eine homogene Energieverteilung besitzt, führt und

    f) die Mischung anschließend auf insbesondere etwa 15 bis 25°C abkühlt, ggf. sammelt und unter sterilen Bedingungen lagert.

2. Verfahren nach Anspruch 1, dadurch gekennzeichnet, daß man in Stufe c) die Dichte durch Zugabe eines Dickungsmittels, ggf. unter gleichzeitiger Erhitzung, einstellt.

3. Verfahren nach Anspruch 1 oder 2, dadurch gekennzeichnet, daß man in Stufe c) den Saft oder einen Teil desselben mit einem Säureregulator auf einen pH-Wert von 3 bis 4 einstellt und ggf. Farb- und Aromastoffe zuführt, die vorzugsweise bis zu einer Menge von etwa 0,65 Gew.-%, bezogen auf die Gesamtmischung aus Früchten und Saft, angewendet werden.

4. Verfahren nach einem der Ansprüche 1 bis 3, dadurch gekennzeichnet, daß man in der Stufe c) dem Saft zur Einstellung der Dichte zusätzlich Wasser entzieht.

5. Verfahren nach einem der vorstehenden Ansprüche, dadurch gekennzeichnet, daß man tiefgefrorene Frächte, insbesondere tiefgefrorene Weichfrüchte, verwendet.

6. Verfahren nach einem der vorstehenden Ansprüche, dadurch gekennzeichnet, daß man der Mischung in Stufe a) zusätzlich Natriumcitrat in einer Menge von 0,2 bis 0,4 Gew.%, bezogen auf die Gesamtmischung, zusetzt.

7. Verfahren nach einem der vorstehenden Ansprüche, dadurch gekennzeichnet, daß man in Stufe a) die Trockenmasse der Früchte auf 55 Gew.% ansteigen läßt.

8. Verfahren nach einem der vorstehenden Ansprüche, dadurch gekennzeichnet, daß man in Stufe c) als Dickungsmittel Pektin, Guarkernmehl, Johannisbrotkernmehl, Carragen oder Mischungen derselben und als Säureregulator Zitronensäure zusetzt.

9. Verfahren nach einem der vorstehenden Ansprüche, dadurch gekennzeichnet, daß man in Stufe e) eine kontinuierliche Förderung der Mischung durch den Erhitzungsbereich durchführt und dazu vorzugsweise eine 2-flügelige Drehkolben- oder Kreiskolbenpumpe oder eine Sinuspumpe verwendet.

10. Verfahren nach einem der vorstehenden Ansprüche, dadurch gekennzeichnet, daß man in der Stufe e) als Mikrowellen-Erhitzungsbereich einen Rundhohlleiter verwendet, in dem das elektromagnetische Mikrowellenfeld in einer $E_{01}$-Mode angeregt ist.

11. Verfahren nach einem der vorstehenden Ansprüche, dadurch gekennzeichnet, daß man in der Stufe e) die Mischung in dem Mikrowellen-Erhitzungsbereich während einer Verweildauer von 2-20 Sekunden auf eine Temperatur von 60-90°C erwärmt.

12. Verfahren nach einem der Ansprüche 1 bis 10, dadurch gekennzeichnet, daß man in der Stufe e) die Mischung im Mikrowellen-Erhitzungsbereich kurzzeitig auf sehr hohe Temperaturen, insbesondere 125°C, erhitzt.

13. Verfahren nach einem der vorstehenden Ansprüche, dadurch gekennzeichnet, daß man im Schritt e) die Mischung vor dem Mikrowellen-Erhitzungsbereich durch einen rohrförmigen Vorwärmbereich hindurchpumpt, der mit Heizwasser beaufschlagt ist, welches beim Abkühlen der Mischung im Schritt f) erwärmt wird.

14. Verfahren nach Anspruch 13, dadurch gekennzeichnet, daß zwischen dem Vorwärmbereich und dem Mikrowellen-Erhitzungsbereich die Mischung schonend vermischt wird.

15. Verfahren nach einem der vorstehenden Ansprüche, dadurch gekennzeichnet, daß man die Fruchtzubereitung einer fraktionierten Wärmebehandlung unterwirft, indem man das Verfahren gemäß Stufe e) wiederholt.

16. Verwendung der nach den Ansprüchen 1 bis 15 erhaltenen Fruchtzubereitung zur Herstellung von gesäuerten Milchprodukten, insbesondere von Joghurt und Fruchtquark.

17. Verwendung der nach den Ansprüchen 1 bis 15 erhaltenen Fruchtzubereitung zur Herstellung von Süßspeisen.

## Claims

1. A process for manufacturing fruit preparations containing whole fruit which can be kept without preservative, in which freely-rolling fruits are mixed with crystalline sugar or highly concentrated sugar solution and thermally preserves the mixture of fruits and juice, **characterized in that**
   a) the mixture is gently moved until the dry mass of the fruits is approximately 35 to 65% by weight,
   b) the fruits are subsequently gently separated from the juice,
   c) the juice or a part thereof is adjusted, particularly by heating to a maximum of 100°C, to a density which at least approximately corresponds to the density of the separated fruits, preferably with an adjustment to a viscosity of 50 to 70 mPa s,
   d) the juice treated in this way is again combined with the separated fruits to form a mixture in which the fruits are uniformly suspended,
   e) the mixture is then passed through a microwave heating region having a microwave field, which has a homogenous distribution of energy in the entire tube cross section, and
   f) the mixture is then cooled to approximately 15 to 25°C, if necessary collected and stored under sterile conditions.

2. A process according to Claim 1, **characterised in that** in stage c) the density is adjusted by the addition of a thickening agent, if necessary in combination with simultaneous heating.

3. A process according to Claim 1 or 2, **characterised in that** in stage c) the juice or a part thereof is adjusted with an acid regulator to a pH value of 3 to 4 and if necessary colouring agents and flavourings are added, which are preferably used up to a proportion of approximately 0.65% by weight related to the entire mixture of fruit and juice.

4. A process according to one of Claims 1 to 3, **characterised in that** in stage c) water is alos removed from the juice to adjust the density.

5. A process according to one of the preceding Claims, **characterised in that** deep-frozen fruits, in particular deep-frozen soft fruits, are used.

6. A process according to one of the preceding Claims, **characterised in that** in stage a) sodium citrate is also added to the mixture in a proportion of 0.2 to 0.4% by weight, relative to the entire mixture.

7. A process according to one of the preceding Claims, **characterised in that** in stage a) the dry mass of the fruits is increased to 55% by weight.

8. A process according to one of the preceding Claims, **characterised in that** in stage c) pectin, guar gum, carob seed grain, carrageen or mixtures thereof are added as a thickening agent and citric acis is added as an acid regulator.

9. A process according to one of the preceding Claims, **characterised in that** in stage e) the mixture is continuously conveyed through the heating region and for this purpose a two-vaned drum or rotary piston pump or a sinusoidal pump is used.

10. A process according to one of the preceding Claims, **characterised in that** in stage e) a circular wave guide in which the electromagnetic microwave field is excited in a $E_{01}$ mode is used as the microwave heating region.

11. A process according to one the preceding Claims, **characterised in that** in stage e) the mixture is heated in the microwave heating region to a temperature of 60-90°C over a period of 2-20 seconds.

12. A process according to one of Claims 1 to 10, **characterised in that** in stage e) the mixture is heated in the microwave heating region for a short time to very high temperatures, in particular 125°.

13. A process according to one of the preceding Claims, **characterised in that** in step e) the mixture is pumped through a tubular prewarming region which is supplied with hot water warmed when cooling the mixture in step f) before reaching the microwave heating region.

14. A process according to Claim 13, **characterised in that** the mixture is gently mixed between the preheating région and microwave heating region.

15. A process according to one of the preceding Claim, **characterised in that** the fruit preparation undergoes a fractionated heat treatment by repeating the process according to stage e).

16. Use of the fruit preparation obtained as specified by Claims 1 to 15 for manufacturing soured milk products, especially yoghurt and fruit quark.

17. Use of the fruit preparation obtained as specified by Claims 1 to 15 for manufacturing desserts.

## Revendications

1. Procédé de fabrication de préparations de fruits pouvant être stockées et renfermant des fruits entiers, sans agents conservateurs, selon lequel on mélange aux fruits en déplacement libre, du sucre cristallisé ou une solution de sucre fortement concentrée, et l'on stérilise ensuite thermiquement le mélange de fruits et de jus, caractérisé en ce que
   a) l'on remue le mélange avec précaution, jusqu'à ce que la masse de matière sèche des fruits s'élève environ à 35 à 65% en poids,
   b) l'on sépare ensuite les fruits avec précaution du jus,

c) l'on amène la consistance du jus ou d'une partie de celui-ci, notamment par échauffement au maximum 100°C, à une valeur correspondant au moins approximativement à la consistance des fruits ayant été séparés, une valeur de viscosité de 50 à 70 mPa s étant de préférence visée,

d) l'on réunit à nouveau le jus ainsi traité et les fruits séparés en un mélange dans lequel les fruits flottent de manière uniforme,

e) l'on conduit ensuite le mélange au travers d'une zone de chauffage par micro-ondes avec un champ de micro-ondes présentant une répartition homogène de l'énergie dans la totalité de la section du tube, et

f) l'on refroidit ensuite le mélange notamment environ à une température de 15 à 25°C, et le cas échéant on collecte le mélange et on le stocke dans des conditions stériles.

2. Procédé melon la revendication 1, caractérisé en ce que dans l'étape c), on établit la consistance par addition d'un épaississant, le cas échéant par chauffage simultané.

3. Procédé selon la revendication 1 ou 2, characterisé en ce que dans l'étape c), on amène le jus ou une partie de celui-ci à une valeur de pH de 3 à 4, à l'aide d'un régulateur d'acidité, et l'on additionne, le cas écheant, des colorants et des arômes qui peuvent être utilisés de préférence jusqu'à une quantité d'environ 65% en poids rapportée à l'ensemble du mélange des fruits et du jus.

4. Procédé selon l'une des revendications 1 à 3, caractérisé en ce que dans l'étape c), on extrait en plus de l'eau du jus pour établir la consistance.

5. Procédé selon l'une des revendications précédentes, caractérisé en ce ce l'on utilise des fruits congelés, et notamment des fruits à chair molle congelés.

6. procédé selon l'une des revendications précédentes, caractérisé en ce que l'on additionne en supplément du mélange, à l'étape a), du citrate de sodium dans une proportion de 0,2 à 0,4% en poids rapportée à l'ensemble du mélange.

7. Procédé selon l'une des revendications précédentes, caractérisé en ce que dans l'étape a), on laisse croître la masse de matière sèche des fruits jusqu'à 55% en poids.

8. Procédé selon l'une des revendications précédentes, caractérisé en ce que dans l'étape c), on additionne en guise d'épaississant, de la pectine, de la farine de guar, de la farine de caroube, du carragheen ou des mélanges de ceux-ci, et de l'acide citrique en guise de régulateur d'acidité.

9. Procédé selon l'une des revendications précédentes, carécterisé en ce que dans l'étape e), on réalise un transport continu du mélange au travers de la zone de chauffage et que l'on utilise pour cela, de préférence, une pompe à piston oscillant ou tournant à deux pales, ou bien une pompe sinusoïdale.

10. Procédé selon l'une des revendications précédentes, caractérisé en ce que dans l'étape e), on utilise en guide de zone de chauffage par micro-ondes, un guide d'ondes circulaire dans lequel le champ de micro-ondes électromagnétique subit une excitation selon le mode $E_{01}$.

11. Procédé selon l'une des revendications précédentes, caractérisé en ce que dans l'étape e), on chauffe le mélange dans la zone de chauffage par micro-ondes, pendant une durée de séjour de 2-20 secondes, à une température de 60-90°C.

12. Procédé selon l'une des revendications 1 à 10, caractérisé en ce que dans l'étape e), on chauffe le mélange pendant un instant très court, dans la zone de chauffage par micro-ondes, à des températures très élevées, notamment de 125°C.

13. Procédé selon l'une des revendications précédentes, caractérisé en ce que dans l'étape e), on pompe le mélange, avant la zone de chauffage par micro-ondes, au travers d'une zone de pré-chauffage de forme tubulaire, soumise à l'action d'eau chaude qui est réchauffée lors du refroidissement du mélange dans l'étape f).

14. Procédé selon la revendication 13, caractérisé en ce que le mélange est remué avec précaution, entre la zone de pré-chauffage et la zone de chauffage par micro-ondes.

15. Procédé selon l'une des revendications précédentes, caractérisé en ce que l'on soumet la préparation de fruits à un traitement thermique fractionné, par le fait que l'on répète l'opération selon l'étape e).

16. Utilisation de la préparation de fruits obtenue selon les revendications 1 à 15, pour la fabrication de produits laitiers acidifiés, notamment du yaourt et du fromage blanc aux fruits.

17. Utilisation de la préparation de fruits obtenue selon les revendications 1 à 15, pour la fabrication de desserts sucrés.